# EUROPÄISCHE PATENTANMELDUNG

(11) **EP 2 849 019 A1**
(43) Veröffentlichungstag der Anmeldung: **18.03.2015**
(21) Anmeldenummer: 14180119.1
(22) Anmeldetag: 07.08.2014
(51) Int. Cl.: G05F 1/10, H02H 9/02, H02J 3/38, H02J 13/00, H02J 3/14, H02J 3/32

(54) **Verfahren und Steuergerät zum Begrenzen einer elektrischen Belastung in einem Netzzweig eines elektrischen Netzes**

(30) Priorität: 05.09.2013 DE 102013217743
(71) Anmelder: ROBERT BOSCH GMBH, 70442 Stuttgart (DE)
(72) Erfinder: Weil, Thomas, 71665 Vaihingen (DE); Preissner, Marcus, 71665 Vaihingen (DE)

(57) **Zusammenfassung**

Die Erfindung betrifft ein Verfahren zum Begrenzen einer elektrischen Belastung in einem Netzzweig (100) eines elektrischen Netzes (106), wobei der Netzzweig (100) eine vorgegebene Maximallast aufweist. Das Verfahren weist einen Schritt des Einlesens, einen Schritt des Ermittelns und einen Schritt des Bereitstellens auf. Im Schritt des Einlesens werden ein Netzsignal und ein Einspeisesignal von einem ersten (202) und einem zweiten (204) Messgerät eingelesen. Das Netzsignal repräsentiert einen Wert und eine Fließrichtung eines Stroms über eine Schnittstelle (F2) zwischen dem Netzzweig (100) und dem Netz (106). Das Einspeisesignal repräsentiert einen Wert eines in den Netzzweig (100) - z.B. von einer Photovoltaik-Anlage (502) - eingespeisten Einspeisestroms. Im Schritt des Ermittelns wird eine Auslastung in dem Netzzweig (100) unter Verwendung des Netzsignals und des Einspeisesignal ermittelt. Im Schritt des Bereitstellens wird ein Steuersignal zum Anpassen des Einspeisestroms unter Verwendung der Auslastung und der Maximallast bereitgestellt, um die Belastung zu begrenzen.

## Beschreibung

### Stand der Technik

Die vorliegende Erfindung bezieht sich auf ein Verfahren zum Begrenzen einer elektrischen Belastung in einem Netzzweig eines elektrischen Netzes, auf ein entsprechendes Steuergerät, auf ein System zum Begrenzen einer elektrischen Belastung in einem Netzzweig eines elektrischen Netzes sowie auf ein entsprechendes Computerprogrammprodukt.

Die DE 10 2010 006 527 A1 beschreibt ein Anpassen von Lastprofilen und/oder Einspeiseprofilen.

### Offenbarung der Erfindung

Vor diesem Hintergrund wird mit der vorliegenden Erfindung ein Verfahren zum Begrenzen einer elektrischen Belastung in einem Netzzweig eines elektrischen Netzes, weiterhin ein Steuergerät, das dieses Verfahren verwendet, ein System zum Begrenzen einer elektrischen Belastung in einem Netzzweig eines elektrischen Netzes sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Eine elektrische Installation ist für einen bestimmten maximalen Stromfluss in den Leitungen ausgelegt. Wenn der tatsächliche Stromfluss in einer Leitung mittelfristig und langfristig über dem Maximalwert liegt, kann sich die Leitung erwärmen. Dabei besteht Entzündungsgefahr. Deshalb sind die Leitungen der Installation in einem Elektroinstallationsverteiler über Sicherungselemente abgesichert, die beim mittelfristigen Überschreiten des maximalen Stromwerts den Stromfluss unterbrechen.

Wenn innerhalb einer Leitung ein Strom von einer Einspeisestelle zu einer Entnahmestelle fließt, ohne dabei über das Sicherungselement zu fließen, kann die Leitung überlastet werden, ohne dass das Sicherungselement eingreifen kann.

Durch ein Erfassen aller in die Leitung eingespeisten und einfließenden Ströme kann die tatsächliche Belastung der Leitung ermittelt werden. Wenn die Belastung über dem Maximalwert liegt, kann die Einspeisung so angepasst werden, dass der Maximalwert wieder eingehalten wird.

Es wird ein Verfahren zum Begrenzen einer elektrischen Belastung in einem Netzzweig eines elektrischen Netzes vorgestellt, wobei der Netzzweig eine vorgegebene Maximallast aufweist, wobei das Verfahren die folgenden Schritte aufweist:
Einlesen eines Netzsignals und eines Einspeisesignals, wobei das Netzsignal einen Wert und/oder eine Fließrichtung eines Stroms über eine Schnittstelle zwischen dem Netzzweig und dem Netz repräsentiert und das Einspeisesignal einen Wert eines in den Netzzweig eingespeisten Einspeisestroms repräsentiert;
Ermitteln einer Auslastung in dem Netzzweig unter Verwendung des Netzsignals und des Einspeisesignals; und
Bereitstellen eines Steuersignals zum Anpassen des Einspeisestroms und/oder des Stroms über die Schnittstelle unter Verwendung der Auslastung und der Maximallast, um die Belastung zu begrenzen.

Weiterhin wird ein Steuergerät zum Begrenzen einer elektrischen Belastung in einem Netzzweig eines elektrischen Netzes vorgestellt, wobei der Netzzweig eine vorgegebene Maximallast aufweist, wobei das Steuergerät die folgenden Merkmale aufweist:
eine Schnittstelle zum Einlesen eines Netzsignals und eines Einspeisesignals, wobei das Netzsignal einen Wert und eine Fließrichtung eines Stroms über eine Schnittstelle zwischen dem Netzzweig und dem Netz repräsentiert und das Einspeisesignal einen Wert eines in den Netzzweig eingespeisten Einspeisestroms repräsentiert;
eine Einrichtung zum Ermitteln einer Auslastung in dem Netzzweig unter Verwendung des Netzsignals und des Einspeisesignals; und
eine Einrichtung zum Bereitstellen eines Steuersignals zum Anpassen des Einspeisestroms und/oder des Stroms über die Schnittstelle unter Verwendung der Auslastung und der Maximallast, um die Belastung zu begrenzen.

Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Ferner wird ein System zum Begrenzen einer elektrischen Belastung in einem Netzzweig eines elektrischen Netzes vorgestellt, wobei der Netzzweig eine vorgegebene Maximallast aufweist, wobei das System die folgenden Merkmale aufweist:
ein Messgerät zum Erfassen eines Werts und einer Fließrichtung eines elektrischen Stroms über eine Schnittstelle zwischen dem Netzzweig und dem Netz, wobei das Messgerät dazu ausgebildet ist, ein den Wert und die Fließrichtung repräsentierendes Netzsignal bereitzustellen;
ein Messgerät zum Erfassen eines in den Netzzweig eingespeisten Einspeisestroms, wobei das Messgerät dazu ausgebildet ist, ein den Einspeisestrom repräsentierendes Einspeisesignal bereitzustellen; und
ein Steuergerät gemäß dem hier vorgestellten Ansatz.

Unter einer elektrischen Belastung kann ein Effektivwert eines elektrischen Stromes verstanden werden. Ein Netzzweig kann ein Stromkreis eines Niederspannungsgruppenverteilers sein. Der Netzzweig kann als Endleitung bezeichnet werden. Bei üblicher Niederspannung kann die Belastung des Netzzweigs auch durch eine elektrische Scheinleistung in dem Netzzweig ausgedrückt werden, da die elektrische Spannung durch das elektrische Netz vorgegeben ist. Eine Maximallast kann einen maximal zulässigen Stromfluss in dem Netzzweig repräsentieren. Ein Netzsignal kann ein Datensignal sein. Ein Einspeisesignal kann ein Datensignal sein. Ein Steuersignal kann ein Datensignal sein. Das Netzsignal und/oder das Einspeisesignal und/oder das Steuersignal kann binär vorliegen bzw. bereitgestellt werden. Eine Schnittstelle zwischen dem Netzzweig und dem Netz kann eine Abzweigung in einem Elektroinstallationsverteiler sein. Eine Auslastung kann einen Effektivwert einer aktuellen Scheinleistung in dem Netzzweig repräsentieren. Ein Anpassen kann ein Verringern, ein Gleichlassen oder ein Vergrößern sein.

Das Einspeisesignal kann den Einspeisestrom über eine Nebenschnittstelle des Netzzweigs repräsentieren. Bei einer einzelnen Schnittstelle kann der Einspeisestrom schnell und einfach angepasst werden.

Das Verfahren kann einen Schritt des Anpassens des Einspeisestroms unter Verwendung des Steuersignals aufweisen. Unter einem Anpassen kann ein Aktivieren oder ein Deaktivieren der Einspeisung verstanden werden. Das Anpassen kann auch durch ein Verringern, ein Gleichlassen oder ein Vergrößern eines Zielwerts für die Einspeisung erfolgen. Beispielsweise kann eine Führungsgröße für einen Regler des Einspeisers angepasst werden. Durch ein integriertes Anpassen kann ein in sich geschlossenes System verwendet werden, an das einfach aufgebaute Komponenten angeschlossen werden können.

Das Steuergerät kann das Messgerät zum Erfassen eines Werts und einer Fließrichtung eines elektrischen Stroms über eine Schnittstelle zwischen dem Netzzweig und dem Netz oder ein Messgerät zum Erfassen eines in den Netzzweig eingespeisten Einspeisestroms aufweisen, wobei das Steuergerät und das Messgerät in einem gemeinsamen Gehäuse angeordnet sind, wobei das erste Messgerät dazu ausgebildet ist, ein den Wert und die Fließrichtung repräsentierendes Netzsignal bereitzustellen und das zweite Messgerät dazu ausgebildet ist, ein den Einspeisestrom repräsentierendes Einspeisesignal bereitzustellen. Durch eine Integration von Komponenten des Systems kann das System einfach aufgebaut sein und mit einem geringen Installationsaufwand angeschlossen werden.

Das Steuergerät kann eine Befestigungseinrichtung für einen ElektroinstallationsVerteiler aufweisen, wobei die Befestigungseinrichtung insbesondere dazu ausgebildet ist, an einer Hutschiene befestigt zu werden. Das Steuergerät kann in einem Gehäuse zur Hutschienenmontage angeordnet sein. Durch die Befestigungseinrichtung kann das Steuergerät schnell, einfach und sicher montiert werden.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung wird nachstehend anhand der beigefügten Zeichnungen beispielhaft näher erläutert. Es zeigen:
- Fig. 1: ein Blockschaltbild eines an einem Netzzweig angeschlossenen Einspeisers;
- Fig. 2: ein Blockschaltbild eines Systems zum Begrenzen einer elektrischen Belastung in einem Netzzweig eines elektrischen Netzes gemäß einem Ausführungsbeispiel der vorliegenden Erfindung;
- Fig. 3: ein Blockschaltbild eines Systems zum Begrenzen einer elektrischen Belastung in einem Netzzweig eines elektrischen Netzes gemäß einem weiteren Ausführungsbeispiel der vorliegenden Erfindung;
- Fig. 4: ein Blockschaltbild eines Systems zum Begrenzen einer elektrischen Belastung in einem Netzzweig eines elektrischen Netzes gemäß einem weiteren Ausführungsbeispiel der vorliegenden Erfindung;
- Fig. 5: ein Blockschaltbild eines Systems zum Begrenzen mit integrierten Komponenten gemäß einem Ausführungsbeispiel der vorliegenden Erfindung;
- Fig. 6: ein Blockschaltbild eines Systems zum Begrenzen mit mehreren angesteuerten Geräten gemäß einem Ausführungsbeispiel der vorliegenden Erfindung; und
- Fig. 7: ein Ablaufdiagramm eines Verfahrens zum Begrenzen einer elektrischen Belastung in einem Netzzweig eines elektrischen Netzes gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

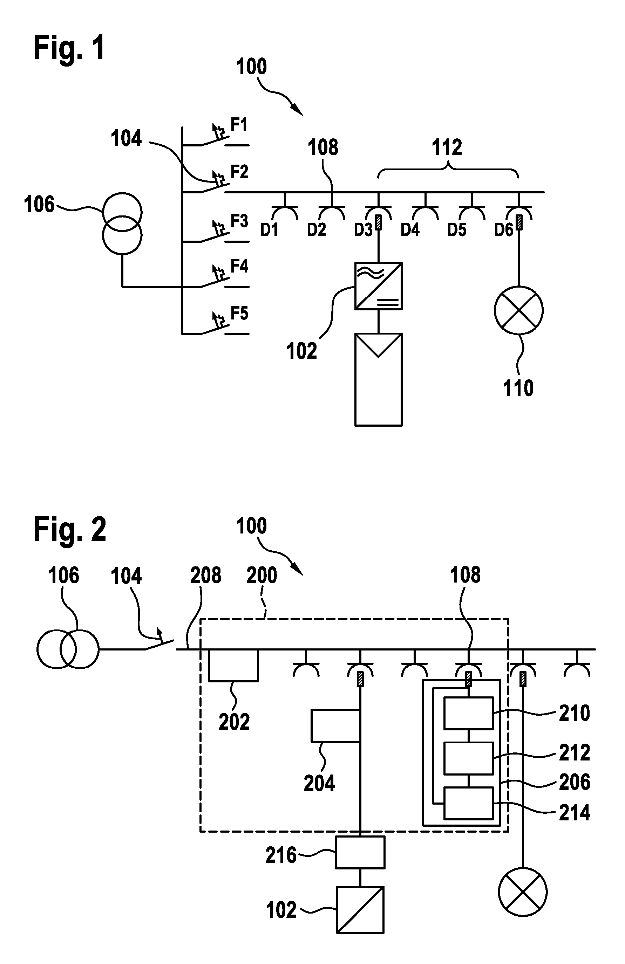

Fig. 1 zeigt ein Blockschaltbild eines an einem Netzzweig 100 angeschlossenen Einspeisers 102. Der Netzzweig 100 ist über einen Leitungsschutzschalter 104 mit einem übergeordneten Netz 106 verbunden. Der Leitungsschutzschalter 104 kann als Sicherungselement bezeichnet werden. Der Netzzweig 100 weist eine Mehrzahl von Steckdosen 108 auf, die teilweise belegt sind, und kann auch oder alternativ weitere fest installierte Verbraucher enthalten. Der Netzzweig 100 weist eine vordefinierte Maximallast auf. Über eine der Steckdosen 108 ist der Einspeiser 102 mit dem Netzzweig 100 verbunden. Über eine andere der Steckdosen 108 ist zumindest ein Verbraucher 110 mit dem Netzzweig 100 verbunden. Der Einspeiser 102 ist im Netzzweig 100 näher an dem Leitungsschutzschalter 104 angeordnet, als der Verbraucher 110.

Der hier vorgestellte Ansatz bezieht sich auf einen Anschluss zumindest eines Fotovoltaik(PV)-Systems 102 auf oder an einem Wohngebäude an das elektrische Netz 106. In den wesentlichen Märkten für PV-Systeme auf Wohngebäuden ist die vom Gesetzgeber vorgegebene Rahmenbedingung in Form einer Einspeisevergütung der Haupttreiber für die Installationen. Diese Einspeisevergütung ist in jüngster Vergangenheit deutlich gefallen, wird weiter reduziert werden und in einigen Jahren voraussichtlich komplett wegfallen. Diese Reduktion erfordert sich wirtschaftlich selbsttragende Systeme.

Liegt der Einspeisetarif unter den PV-Stromgestehungskosten, ist Wirtschaftlichkeit unter der Bedingung von "Strombezugskosten über den Gestehungskosten" mit einem hohen Anteil an selbst verbrauchtem PV-Strom zu erreichen.

Hoher Eigenverbrauch lässt sich durch Speichersysteme oder mit kleinen Anlagengrößen, bei denen der erzeugte Strom zeitgleich von Verbrauchern 110 im selben Haushalt komplett verbraucht wird, erreichen. Daher wird es für einen Teilmarkt einen Trend zu kleineren Anlagen geben. Bei diesen ist der Anteil der leistungsunabhängigen Installationskosten höher als bei größeren Anlagen. Diese "Grundinstallationskosten" umfassen die Beratung, Planung, Leitungsverlegung vom Dach zum Zähler sowie Einspeisezähler und Anschuss an das Stromnetz 106. Um diese Grundkosten zu reduzieren, können "Plug and play" fähige Systeme verwendet werden, die der Endkunde selbst- oder weitestgehend selbst installieren kann.

Um Strom in das Niederspannungsnetz 106 einzuspeisen, ist ein Anschluss direkt an der zentralen Verteilung des Gebäudes möglich. Eine Einspeisung über eine Steckdose 108 in einem Endstromkreis 106 verringert den Elektroinstallationsaufwand demgegenüber erheblich.

Ein "Plug and play" Modul 102 weist einen Stecker zum Anschluss an jede Steckdose 108 im Hausnetz 100 auf. Ein Anschluss erfolgt ohne Verdrahtungsaufwand.

Eine Einspeisung über eine normale Steckdose 108, die für Verbraucher bestimmt ist, ist mit dem nach Norm (DIN VDE 0100-430:2010 bzw. IEC 60364-4-43) geforderten Leitungsschutz zunächst nicht vereinbar. Die Problematik ist eine potenzielle Leitungsüberlastung im betroffenen Endstromkreis 100. Dies ist in Fig. 1 dargestellt, und am folgenden Zahlenbeispiel verdeutlicht. Eine in Deutschland gängige Auslegung sind 1,5 mm² Leitungsquerschnitt, abgesichert mit einem 16-A-Leitungsschutzschalter 104 (Sicherungsautomat).

Werden beispielsweise an den Steckdosen 108 D5 und D6 Verbraucher 110 angeschlossen, die in Summe mehr als 16 A Strom erfordern, wird die Überlastung einer Leitung 112 zwischen Leitungsschutzschalter 104 F2 und D3 durch das Auslösen des Leitungsschutzschalters 104 F2 verhindert. Speist nun die PV-Anlage 102 beispielsweise 6 A an D3 ein, kann an D5 und D6 zusammen maximal 22 A angeschlossen werden, ohne dass der Leitungsschutzschalter 104 auslöst. Die Leitung 112 zwischen D3 und D5 ist aber mit 22 A überlastet.

Ein Austausch des Leitungsschutzschalters 104 gegen einen mit einem Nennwert von 10 A wäre eine denkbare Lösung, bringt aber den Nachteil mit sich, dass bei fehlender Einspeisung der Leitungsschutz 104 eventuell zu früh auslöst. Beispielsweise nachts fehlt die PV-Einspeisung und der Stromkreis 100 wird dauerhaft mit 13 A belastet. Für die Leitung 112 wäre das thermisch zulässig, dennoch würde der Leitungsschutz 104 abschalten.

Durch den hier vorgestellten Ansatz wird ein Anschluss einer PV-Anlage 102 an eine Steckdose ermöglicht, ohne dass Leitungen überlastet werden.

Fig. 2 zeigt ein Blockschaltbild eines Systems 200 zum Begrenzen einer elektrischen Belastung in einem Netzzweig 100 eines elektrischen Netzes 106 gemäß einem Ausführungsbeispiel der vorliegenden Erfindung. Der Netzzweig 100 entspricht dem Netzzweig in Fig. 1 und weist eine vorgegebene Maximallast auf, die durch den Leitungsschutzschalter 104 festgelegt ist. Das System 200 weist ein erstes Messgerät 202, ein zweites Messgerät 204 und ein Steuergerät 206 auf. Das erste Messgerät 202 ist dazu ausgebildet, einen Wert und eine Fließrichtung eines elektrischen Stroms über eine Schnittstelle 208 zwischen dem Netzzweig 100 und dem Netz 106 zu erfassen und ein, den Wert und die Fließrichtung repräsentierendes Netzsignal bereitzustellen. Das erste Messgerät 202 ist im Bereich der Schnittstelle 208 angeordnet. Das zweite Messgerät 204 ist an einer Zuleitung des Einspeisers 102 angeordnet. Das zweite Messgerät 204 ist dazu ausgebildet, einen von dem Einspeiser 102 in den Netzzweig 100 eingespeisten Einspeisestrom zu erfassen und ein, den Einspeisestrom repräsentierendes Einspeisesignal bereitzustellen. Das Steuergerät 206 ist dazu ausgebildet, die elektrische Belastung in dem Netzzweig 100 auf die vorgegebene Maximallast zu begrenzen. Das Steuergerät 206 weist eine Schnittstelle 210 zum Einlesen, eine Einrichtung 212 zum Ermitteln und eine Einrichtung 214 zum Bereitstellen auf. Die Schnittstelle 210 ist dazu ausgebildet, das Netzsignal und das Einspeisesignal einzulesen. Die Einrichtung 212 zum Ermitteln ist dazu ausgebildet, eine Auslastung in dem Netzzweig 100 unter Verwendung des Netzsignals und des Einspeisesignals zu ermitteln. Die Einrichtung 214 zum Bereitstellen ist dazu ausgebildet, ein Steuersignal zum Anpassen des Einspeisestroms und/oder des Stroms über die Schnittstelle 208 unter Verwendung der Auslastung und der Maximallast bereitzustellen, um die Belastung zu begrenzen. In diesem Ausführungsbeispiel werden das Netzsignal, das Einspeisesignal und das Steuersignal über den Netzzweig 100 verbreitet und können somit an jeder Stelle des Netzzweigs 100 abgegriffen werden. Daher ist das Steuergerät 206 über eine freie Steckdose 108 mit den Messgeräten 202, 204 verbunden. Die Messgeräte kommunizieren ebenfalls über den Netzzweig 100. Das Steuersignal wird über den Netzzweig 100 an einen Strombegrenzer 216 gesendet, der den Einspeisestrom und/oder den Strom über die Schnittstelle 208 entsprechend des Steuersignals begrenzt. Dabei kann entweder der Einspeisestrom begrenzt werden oder der Strom über die Schnittstelle 208 begrenzt werden. Ebenso können der Einspeisestrom und der Strom über die Schnittstelle 208 begrenzt werden. Durch das Begrenzen des Stroms über die Schnittstelle 208 kann der Einspeiser 102 über einen möglichst langen Zeitraum im Optimalbetrieb bei maximaler Leistungsabgabe betrieben werden. Ebenso kann der Netzzweig 100 im Inselbetrieb betrieben werden.

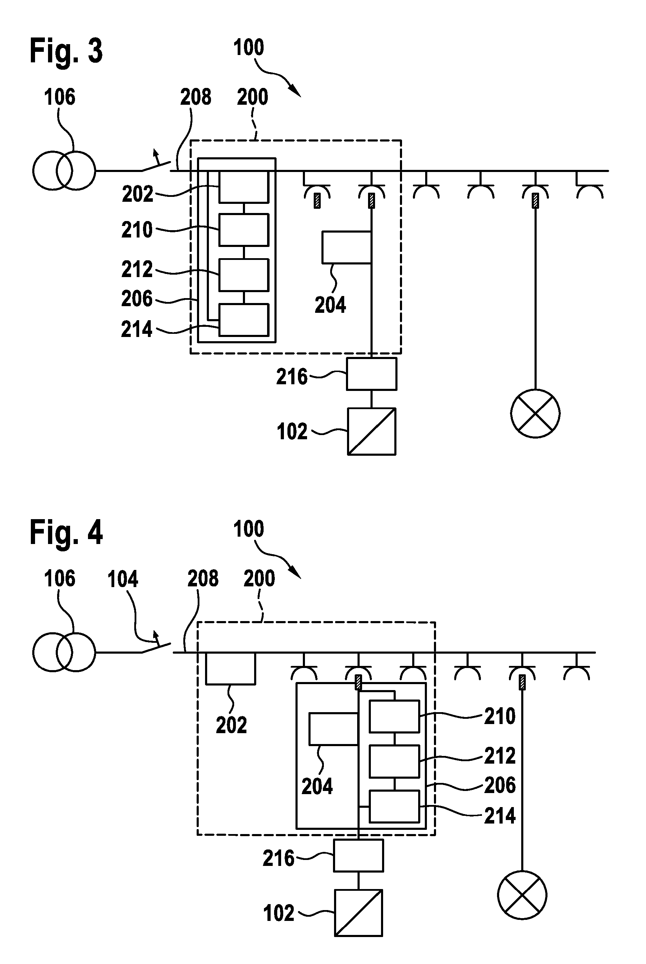

Fig. 3 zeigt ein Blockschaltbild eines Systems 200 zum Begrenzen einer elektrischen Belastung in einem Netzzweig 100 eines elektrischen Netzes 106 gemäß einem weiteren Ausführungsbeispiel der vorliegenden Erfindung. Das System 200 entspricht dem System in Fig. 2. Im Gegensatz zu Fig. 2 ist das erste Messgerät 202 zum Erfassen des Werts und der Fließrichtung des elektrischen Stroms über die Schnittstelle 208 zwischen dem Netzzweig 100 und dem Netz 106 Bestandteil des Steuergeräts 206. Wie in Fig. 2 ist das erste Messgerät 202 dazu ausgebildet, das den Wert und die Fließrichtung repräsentierende Netzsignal bereitzustellen. Das Steuergerät 206 und das erste Messgerät 202 sind in einem gemeinsamen Gehäuse angeordnet.

Fig. 4 zeigt ein Blockschaltbild eines Systems 200 zum Begrenzen einer elektrischen Belastung in einem Netzzweig 100 eines elektrischen Netzes 106 gemäß einem weiteren Ausführungsbeispiel der vorliegenden Erfindung. Das System 200 entspricht dem System in Fig. 2. Im Gegensatz zu Fig. 2 ist das zweite Messgerät 204 zum Erfassen des in den Netzzweig 100 eingespeisten Einspeisestroms Bestandteil des Steuergeräts 206. Wie in Fig. 2 ist das zweite Messgerät 204 dazu ausgebildet, das den Einspeisestrom repräsentierende Einspeisesignal bereitzustellen. Das Steuergerät 206 und das zweite Messgerät 204 sind in einem gemeinsamen Gehäuse angeordnet.

In einem Ausführungsbeispiel weist das Steuergerät 206 eine Befestigungseinrichtung für einen Elektroinstallations-Verteiler auf. Die Befestigungseinrichtung ist dazu ausgebildet, wie ein Leitungsschutzschalter an einer Hutschiene des Elektroinstallations-Verteilers befestigt zu werden.

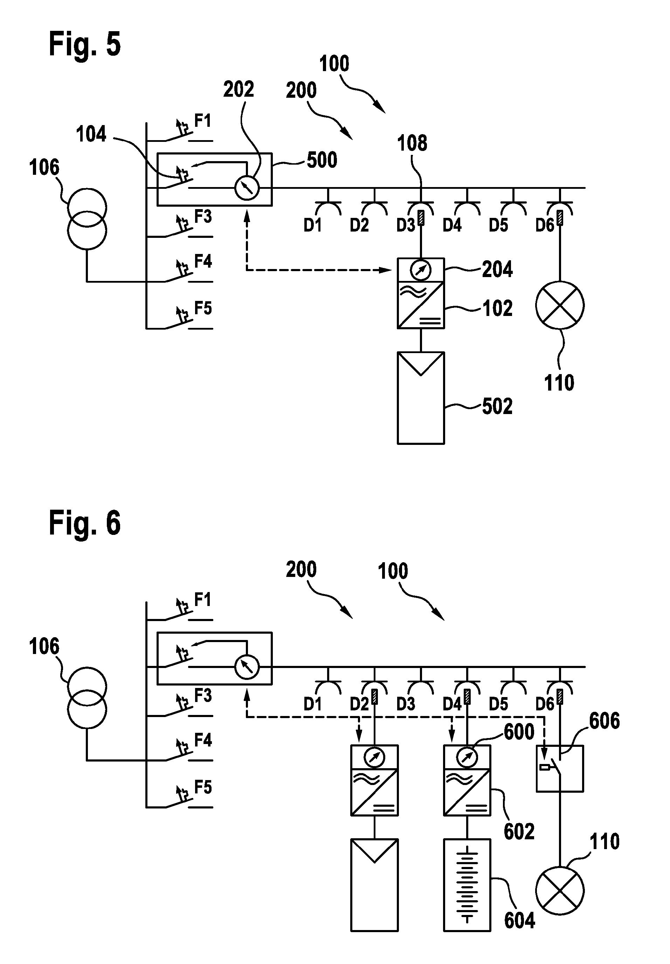

Fig. 5 zeigt ein Blockschaltbild eines Systems 200 zum Begrenzen mit integrierten Komponenten gemäß einem Ausführungsbeispiel der vorliegenden Erfindung. Das System 200 entspricht dem System in Fig. 2. Im Gegensatz zu Fig. 2 ist das erste Messgerät 202 in einem gemeinsamen Gehäuse 500 mit dem Leitungsschutzschalter 104 angeordnet. Weiterhin ist das zweite Messgerät 204 in einem Gehäuse des Einspeisers 102 angeordnet. Das Steuergerät ist nicht dargestellt und kann in das Gehäuse 500 und/oder in dem Einspeiser 102 integriert sein. Ebenfalls kann das Steuergerät wie in Fig. 2 als eigenständiges Gehäuse ausgeführt sein. Der Strombegrenzer ist ebenfalls nicht dargestellt. Seine Funktion ist in dem Einspeiser 102 integriert. Der Einspeiser 102 ist hier dazu ausgebildet, ansprechend auf das Steuersignal den Einspeisestrom anzupassen. Der Einspeiser 102 ist hier ein Wechselrichter einer Fotovoltaikanlage 502.

Mit anderen Worten zeigt Fig. 5 einen Leitungsschutzschalter 104 mit anpassbarer Charakteristik zum Anschluss von Einspeisern 102 im Endstromkreis 100. Der hier vorgestellte Ansatz kann auch auf einen fest verdrahteten Anschluss an einen bestehenden Endstromkreis 100 angewendet werden.

Ein Grundgedanke des hier vorgestellten Ansatzes ist eine Kommunikation zwischen einem neuartigen Leitungsschutzschalter 104 und der Einspeiseeinheit 102, beispielsweise einer PV-Anlage 502 zur Vermeidung der Überlastung des Leitungsabschnitts 100. Des Weiteren wird die im Einspeiser 102 geforderte selbsttätige Schaltstelle zwischen einer netzparallelen Eigenerzeugungsanlage 102 und dem öffentlichen Niederspannungsnetz 106 um eine Abfrage auf einen geeigneten Leitungsschutzschalter 104 erweitert.

Statt eines heutigen gängigen Leitungsschutzes (Schmelzsicherung oder Leitungsschutzschalter/ "Sicherungsautomat") wird ein neuartiger Leitungsschutzschalter 104 eingesetzt. Dieser misst permanent den Strom zwischen Verteilung 106 und Endstromkreis 100, also am Einbauort. Zudem ist der neuartige Leitungsschutzschalter 104 in der Lage, mit Geräten 102, 110 im Endstromkreis 100 zu kommunizieren und somit Informationen über Strom-/Leistungsfluss an anderen Stellen, z. B. an einer Einspeisestelle 108 des Endstromkreises 100 zu erhalten.

Aus den gesammelten Informationen ermittelt der neue Leitungsschutzschalter 104 die gesamte Belastung der Leitung 100 und schaltet basierend darauf.

Die Kommunikation zwischen dem Leitungsschutzschalter 104 und dem Einspeiser 102 ist für den Betrieb erforderlich.

Bei leitungsgebundener Kommunikation in der Energieleitung 100 wird im Leitungsschutzschalter 104 ein Richtkoppler verwendet, um die Datenübertragung Richtung Verteilung zu unterbinden. Dadurch können Störungen und Fehlzuordnungen ausgeschlossen werden. Bei funkbasierter Kommunikation wird die eindeutige Zuordnung der Stromkreise über ein eindeutiges Kommunikationsprotokoll sichergestellt.

In einem Ausführungsbeispiel ermittelt der Leitungsschutzschalter 104 unter Verwendung eines Algorithmus den maximal auftretenden Summenstrom vektoriell über die Schnittstelle und alle Einspeiser 102 und schaltet bei Überschreiten seiner Abschaltkennlinie aus. Dabei weist der Leitungsschutzschalter 104 eine Strom-Zeit-Charakteristik auf. Kurzzeitig kann der Summenstrom deutlich über dem Nennstrom ansteigen. Der Schalter 104 sammelt im beschriebenen Ausführungsbeispiel Daten und erreicht eine Entscheidung unter Verwendung des Algorithmus.

In einem Ausführungsbeispiel ermittelt der Leitungsschutzschalter 104 die Summe bzw. eine Vektorsumme aus dem Strom am eigenen Einbauort und dem eingespeisten Strom bzw. Strömen. Für die Differenz zwischen dem Nennstrom, also der maximalen Belastbarkeit des Endstromkreises 100 und der aktuellen Summe wird eine Freigabe über das Kommunikationsprotokoll für weitere Einspeisung erteilt. Dadurch kann beispielsweise die PV-Einspeisung 102 reduziert statt abgeschaltet werden. Die PV 502 arbeitet dann außerhalb des MPP. Dadurch können unnötige Abschaltungen vermieden werden.

Fig. 6 zeigt ein Blockschaltbild eines Systems 200 zum Begrenzen mit mehreren angesteuerten Geräten gemäß einem Ausführungsbeispiel der vorliegenden Erfindung. Das System 200 entspricht dem System in Fig. 5. Zusätzlich ist das System 200 um ein weiteres Messgerät 600 erweitert. Das weitere Messgerät 600 ist in einen Gleich-/Wechselrichter 602 eines Energiespeichers 604 integriert. Der Gleich-/Wechselrichter 602 ist ebenfalls durch das Steuersignal des Steuergeräts ansteuerbar. Der Energiespeicher 604 ist hier als Pufferbatterie ausgeführt. Weiterhin ist in den Netzzweig 100 ein steuerbarer Schalter 606 integriert. Der steuerbare Schalter 606 ist in eine Leitung zu dem Verbraucher 110 eingebaut. Der steuerbare Schalter 606 ist ebenfalls durch das Steuersignal ansteuerbar.

In einem Ausführungsbeispiel ist das System 200 auf mehr als eine Einspeiseeinheit erweitert. Es wird sichergestellt, dass entweder nur eine Einspeiseeinheit 102 mit PV-Anlage 502 an den Stromkreis 100 nach der einen neuartigen Sicherung 104 angeschlossen ist, beispielsweise per Freigabe durch den Leitungsschutz 104, oder es wird eine Kommunikation zwischen Sicherung 104 und den mehreren Einspeiseeinheiten 102 erfolgen, die sicherstellt, dass die Summe aller Ströme in keinem Leitungsabschnitt den maximal zulässigen Strom überschreitet. Dazu gibt es einen Master (i.d.R. der Leitungsschutz 104), der dies bewerkstelligt. Zur Kommunikation des Stroms wird eine eindeutige Identifikation mit übertragen, und fehlerhafte Dopplungen oder Unterschlagungen einer Einspeiseeinheit 102 werden verhindert.

In einem Ausführungsbeispiel ist das System 200 dazu ausgebildet, durch eine Netztrennung das Netz 106 von dem Netzzweig 100 abzutrennen. Dadurch kann ein Inselbetrieb durchgeführt werden.

In einem Ausführungsbeispiel werden Informationen für ein übergeordnetes Energiemanagement bereitgestellt.

In einem Ausführungsbeispiel greift das System aktiv in ein elektrisches Lastmanagement der Verbraucher 110 ein, um die Belastung im Netzzweig 100 unter der Maximallast zu halten.

In einem Ausführungsbeispiel ist an einer Steckdose ein elektrisches Speichersystem 604 angeschlossen. Das Speichersystem 604 ermöglicht ein (Spitzen-)Lastmanagement, um gemeinsam mit einem PV-Einspeiser 102 den Eigenverbrauch zu erhöhen.

In einem Ausführungsbeispiel kontrolliert das System 200 über das Steuersignal automatisiert geschaltete Verbraucher 110.

Wenn die Einspeisung ins Netz 106 vom Versorger nicht erwünscht wird, kann durch eine Kommunikation mit dem Messelement 202 am Netzanschlusspunkt der Einspeiser 102 auf "keine Einspeisung" geregelt werden. Dann wird, wenn zu viel Energie erzeugt wird, der Einspeiser 102 abgeregelt oder ausgeschaltet.

Das hier vorgestellte System 200 kann vom Endverbraucher selbst installiert werden. Einziger kurzer Arbeitsschritt durch einen Elektriker ist ein Austausch eines vorhandenen Leitungsschutzelements gegen den neuartigen Schutzschalter 104.

In einem Ausführungsbeispiel bleibt der bestehende Leitungsschutz 104, wie er ist. Zusätzlich sitzt im Bereich des Leitungsschutzes 104 einen Clip auf der Leitung. Der Clip enthält alle nötige Funktionalität. Der Clip kann aufgebaut sein, wie ein Klappferrit. Das Messen funktioniert induktiv, wie bei einer Stromzange. Die Eigenversorgung funktioniert nach dem Prinzip eines Längstrafos und/oder wie in einem Phasenschieber. Energie wird in einem Pufferspeicher für stromlose Zeitspannen gepuffert. Die Kommunikation mit dem Wechselrichter 102 für Freigabe erfolgt über die Trägerfrequenztechnik. Dadurch kann das System 200 ohne einen Eingriff in die bestehende Verdrahtung im Sicherungskasten installiert werden.

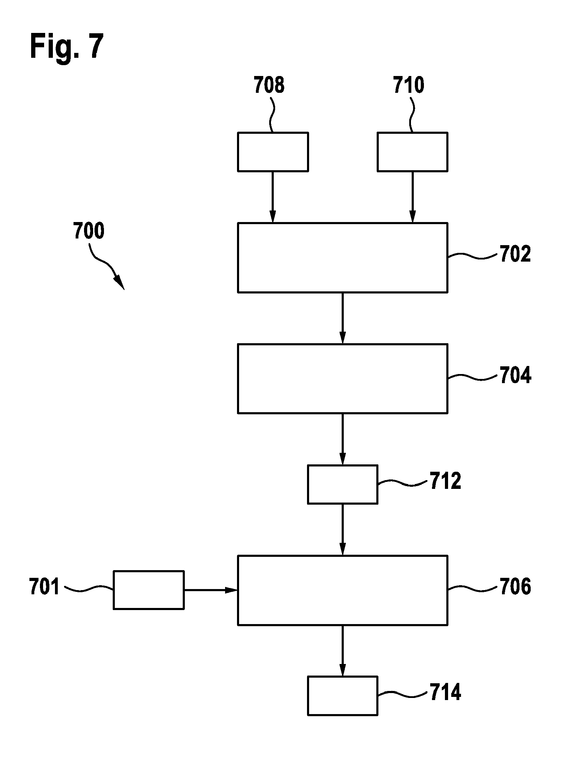

Fig. 7 zeigt ein Ablaufdiagramm eines Verfahrens 700 zum Begrenzen einer elektrischen Belastung in einem Netzzweig eines elektrischen Netzes gemäß einem Ausführungsbeispiel der vorliegenden Erfindung. Der Netzzweig weist wie in den Figuren 1 bis 6 eine vorgegebene Maximallast 701 auf. Das Verfahren 700 weist einen Schritt 702 des Einlesens, einen Schritt 704 des Ermittelns und einen Schritt 706 des Bereitstellens auf. Im Schritt 702 des Einlesens werden ein Netzsignal 708 und ein Einspeisesignal 710 eingelesen. Das Netzsignal 708 repräsentiert einen Wert und eine Fließrichtung eines Stroms über eine Schnittstelle zwischen dem Netzzweig und dem Netz. Das Einspeisesignal 710 repräsentiert einen Wert eines in den Netzzweig eingespeisten Einspeisestroms. Im Schritt 704 des Ermittelns wird eine Auslastung 712 in dem Netzzweig unter Verwendung des Netzsignals 708 und des Einspeisesignals 710 ermittelt. Im Schritt 706 des Bereitstellens wird ein Steuersignal 714 zum Anpassen des Einspeisestroms und/oder des Stroms über die Schnittstelle unter Verwendung der Auslastung 712 und der Maximallast 701 bereitgestellt, um die Belastung zu begrenzen.

In einem Ausführungsbeispiel repräsentiert im Schritt 702 des Einlesens das Einspeisesignal 710 den Einspeisestrom über eine einzelne Nebenschnittstelle des Netzzweigs. Eine Nebenschnittstelle ist eine Steckdose wie in den Figuren 1 bis 6 dargestellt.

In einem Ausführungsbeispiel repräsentiert im Schritt 702 des Einlesens das Einspeisesignal 710 den Einspeisestrom über zumindest zwei voneinander unabhängige Nebenschnittstellen des Netzzweigs. Beispielsweise ist wie in Fig. 6 an einer Nebenschnittstelle eine Fotovoltaikanlage angeschlossen und an einer anderen Nebenschnittstelle ein Pufferspeicher angeschlossen.

In einem Ausführungsbeispiel weist das Verfahren 700 einen Schritt des Anpassens des Einspeisestroms unter Verwendung des Steuersignals 714 auf.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (700) zum Begrenzen einer elektrischen Belastung in einem Netzzweig (100) eines elektrischen Netzes (106), wobei der Netzzweig (100) eine vorgegebene Maximallast (701) aufweist, wobei das Verfahren (700) die folgenden Schritte aufweist:
Einlesen (702) eines Netzsignals (708) und eines Einspeisesignals (710), wobei das Netzsignal (708) einen Wert und eine Fließrichtung eines Stroms über eine Schnittstelle (208) zwischen dem Netzzweig (100) und dem Netz (106) repräsentiert und das Einspeisesignal (710) einen Wert eines in den Netzzweig (100) eingespeisten Einspeisestroms repräsentiert;
Ermitteln (704) einer Auslastung (712) in dem Netzzweig (100) unter Verwendung des Netzsignals (708) und des Einspeisesignals (710); und
Bereitstellen (706) eines Steuersignals (714) zum Anpassen des Einspeisestroms und/oder des Stroms über die Schnittstelle (208) unter Verwendung der Auslastung (712) und der Maximallast (701), um die Belastung zu begrenzen.

2. Verfahren (700) gemäß Anspruch 1, bei dem im Schritt (702) des Einlesens das Einspeisesignal (708) den Einspeisestrom über eine Nebenschnittstelle (108) des Netzzweigs (100) repräsentiert.

3. Verfahren (700) gemäß einem der vorangegangenen Ansprüche, mit einem Schritt des Anpassens des Einspeisestroms unter Verwendung des Steuersignals (714).

4. Steuergerät (206) zum Begrenzen einer elektrischen Belastung in einem Netzzweig (100) eines elektrischen Netzes (106), wobei der Netzzweig (100) eine vorgegebene Maximallast (701) aufweist, wobei das Steuergerät (206) die folgenden Merkmale aufweist:
eine Schnittstelle (210) zum Einlesen eines Netzsignals (708) und eines Einspeisesignals (710), wobei das Netzsignal (708) einen Wert und eine Fließrichtung eines Stroms über eine Schnittstelle (208) zwischen dem Netzzweig (100) und dem Netz (106) repräsentiert und das Einspeisesignal (710) einen Wert eines in den Netzzweig (100) eingespeisten Einspeisestroms repräsentiert;
eine Einrichtung (212) zum Ermitteln einer Auslastung (712) in dem Netzzweig (100) unter Verwendung des Netzsignals (708) und des Einspeisesignals (710); und
eine Einrichtung (214) zum Bereitstellen eines Steuersignals (714) zum Anpassen des Einspeisestroms und/oder des Stroms über die Schnittstelle (208) unter Verwendung der Auslastung (712) und der Maximallast (701), um die Belastung zu begrenzen.

5. Steuergerät (206) gemäß Anspruch 4, mit einem Messgerät (202) zum Erfassen eines Werts und einer Fließrichtung eines elektrischen Stroms über eine Schnittstelle (208) zwischen dem Netzzweig (100) und dem Netz (106) oder einem Messgerät (204) zum Erfassen eines in den Netzzweig (100) eingespeisten Einspeisestroms, wobei das Messgerät (202, 204) dazu ausgebildet ist, ein den Wert und die Fließrichtung repräsentierendes Netzsignal (708) bereitzustellen oder dazu ausgebildet ist, ein den Einspeisestrom repräsentierendes Einspeisesignal (710) bereitzustellen, wobei das Steuergerät (206) und das Messgerät (202, 204) in einem gemeinsamen Gehäuse angeordnet sind.

6. Steuergerät (206) gemäß einem der vorangegangenen Ansprüche, mit einer Befestigungseinrichtung für einen Elektroinstallations-Verteiler, wobei die Befestigungseinrichtung insbesondere dazu ausgebildet ist, an einer Hutschiene befestigt zu werden.

7. System (200) zum Begrenzen einer elektrischen Belastung in einem Netzzweig (100) eines elektrischen Netzes (106), wobei der Netzzweig (100) eine vorgegebene Maximallast (701) aufweist, wobei das System (200) die folgenden Merkmale aufweist:
ein Messgerät (202) zum Erfassen eines Werts und/oder einer Fließrichtung eines elektrischen Stroms über eine Schnittstelle (208) zwischen dem Netzzweig (100) und dem Netz (106), wobei das Messgerät (202) dazu ausgebildet ist, ein den Wert und die Fließrichtung repräsentierendes Netzsignal (708) bereitzustellen;
ein Messgerät (204) zum Erfassen eines in den Netzzweig (100) eingespeisten Einspeisestroms, wobei das Messgerät (204) dazu ausgebildet ist, ein den Einspeisestrom repräsentierendes Einspeisesignal (710) bereitzustellen; und
ein Steuergerät (206) gemäß einem der Ansprüche 4 bis 6.

8. Computer-Programmprodukt mit Programmcode zur Durchführung des Verfahrens nach einem der Ansprüche 1 bis 3, wenn das Programmprodukt auf einer Vorrichtung ausgeführt wird.
